# EUROPEAN PATENT APPLICATION

(11) **EP 0 853 161 A2**
(43) Date of publication of application: **15.07.1998**
(21) Application number: 98300154.6
(22) Date of filing: 09.01.1998
(51) Int. Cl.: E01C 9/00

(54) **A grass protection system**

(30) Priority: 10.01.1997 GB 9700476
(71) Applicant: Cooper Clarke Group plc, Farnworth, Bolton BL4 9LP (GB)
(72) Inventor: Burnett-Jones, Royston Wayne, Worcester, WR5 3EH (GB)
(74) Representative: Suckling, Andrew Michael

(57) **Abstract**

A grass protection system has first and second grass protection blocks and a first interlock means (25,26;25',26') for preventing or substantially preventing vertical movement of the first grass protection block relative to the second grass protection block. The system also has a second interlock means (27,28,27') for preventing the first grass protection block moving apart from the second grass protection block to such a distance as would dis-engage the interlocking between the first and second grass protection blocks

## Description

This invention relates to a grass protection system that provides a surface that appears to be a normal grass surface, but which has greater strength than grass and so can bear heavier weights than grass In the system grass grows in a re-inforcing member, so that the re-inforcing member provides mechanical strength. The re-inforcing member will be referred to as a "grass protection block" throughout the specification and claims.

Use of grass protection blocks enables the ground to support much higher weights than can be supported by a normal grass surface. Grass protection blocks can be used to provide, for example, roadways, car parks, or landing pads for helicopters or light aircraft. They can also be used to prevent erosion of grass surfaces in public areas such as parks or near tourist attractions

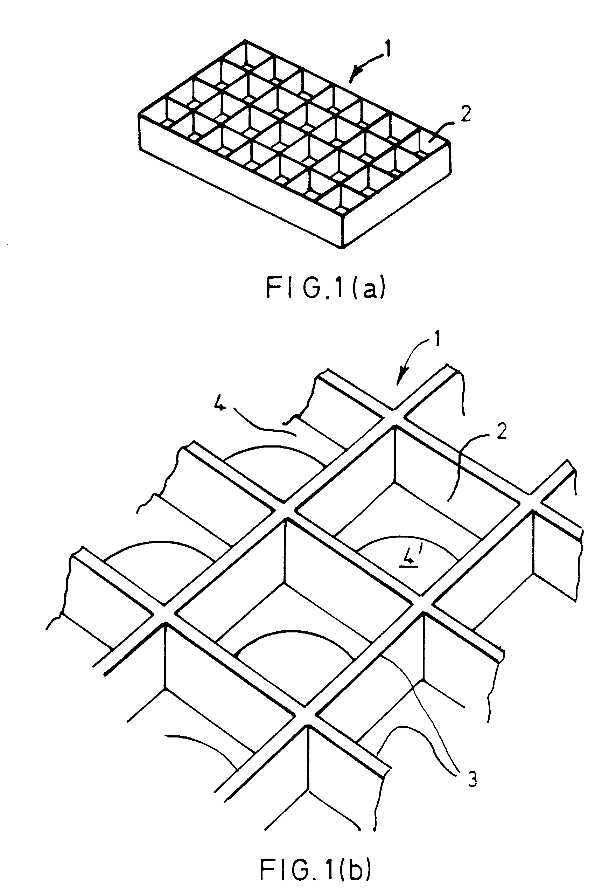

A conventional grass protection block 1 is shown in Figure 1(a), and a partial enlarged view of a block is shown in Figure 1(b). The block has a matrix of cells 2, with each cell being defined by four side walls 3 and a base 4 An aperture 4' is provided in the base to enable water to drain from the block. In use root growth medium (this can be a blend of one or more of soil, sand and fertiliser) is put in each cell, and grass seed is planted in the root growth medium. When the grass has grown the structure of the block is hidden, so producing what appears to be a normal grass surface. Alternatively, turf can be put in the cells rather than growing the grass from seed

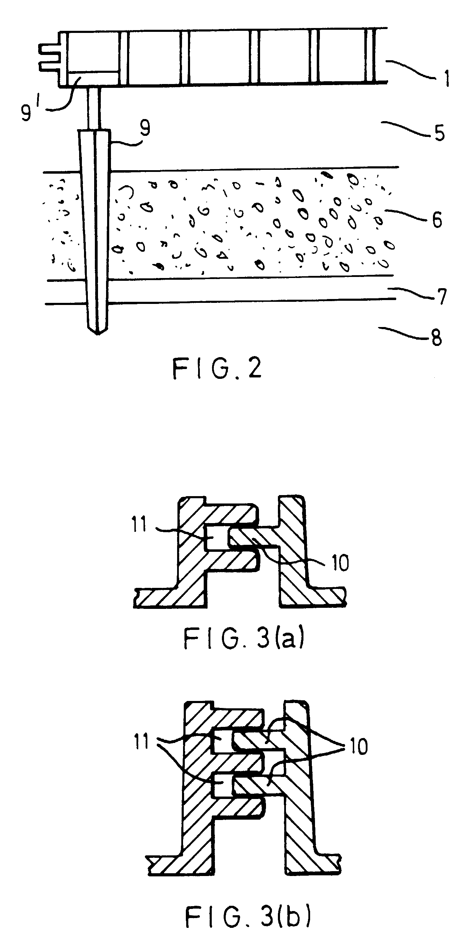

The block is made in a size which allows easy handling, and an array of blocks that gives a hard surface of the required size is built up Blocks in adjacent rows or columns of the array are usually staggered, to provide greater strength. A typical installation is shown in Figure 2. The blocks are installed on a bedding layer 5 that can be a mixture of soil and sand, or can be gravel The bedding layer is disposed above a structural base layer 6 (e.g. a well compacted sub-base material) which may be separated from the subgrade material 8 by a geotextile layer 7. The strength of the subgrade material will dictate the need for the use of a geotextile layer, which will also be influenced by the magnitude of the traffic loading. The blocks can be temporarily located by the use of a retaining pin which passes through the aperture in the base of a cell with the head 9 of the pin holding the block down. Depending on the end use of the Grass Protection Block, it may be necessary to provide a more robust restraining method, such as kerb haunching with concrete materials.

It is necessary for adjacent grass protection blocks to be interlocked with one another, in order to prevent vertical movement of one block relative to another (this will be referred to as "vertical interlocking"). This allows a load bearing on one block to be distributed through the array of blocks. If vertical interlocking is not provided there is a risk that a block under load will sink with respect to the other blocks.

One form of vertical interlocking is shown in Figures 3(a) and 3(b). One wall of a block is provided with one or more "tongues" 10, and the or each tongue engages in a co-operating groove 11 provided in the side wall of an adjacent array.

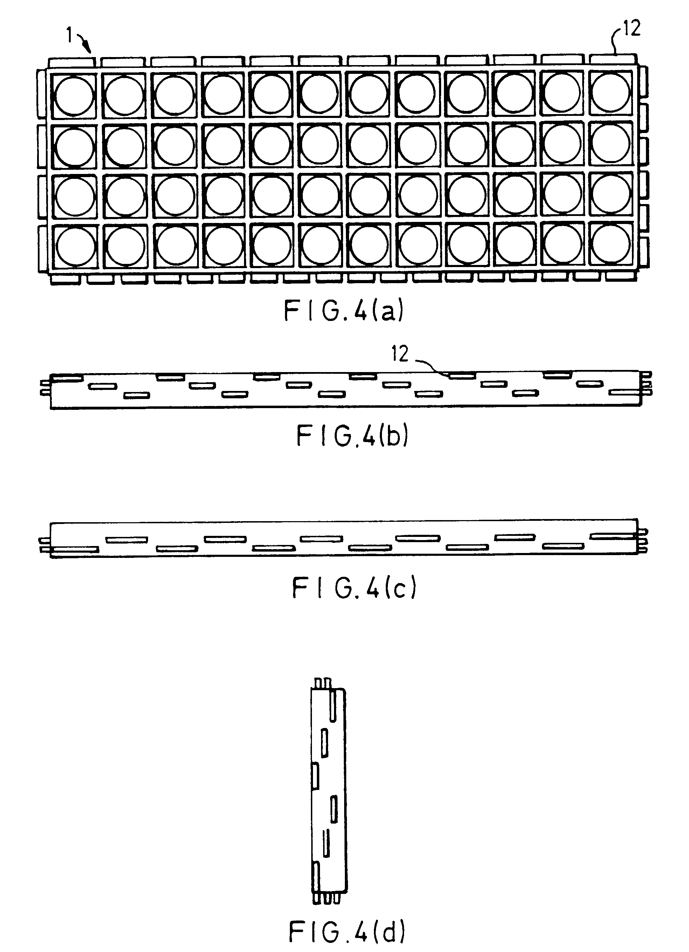

A grass protection block having an alternative interlocking is shown in Figures 4(a) to 4(d). The side walls of the blocks are provided with tegular edges 12. The edges of adjacent blocks abut one on another in such a manner as to prevent vertical movement of one block relative to another.

Grass protection blocks are usually made from either a plastics material or from a concrete material. A plastic block has the advantage of being mechanically strong while being lightweight and easy to cut. A plastic block will expand and contract as a result of temperature variations. In extreme conditions the prior art blocks can contract to such an extent that the tongue(s) or tegular edges of one block no longer engage the groove(s) or tegular edges of an adjacent block. A load applied to one block will then not be transmitted to the other blocks, and the grass protection blocks will not provide a stable structural platform.

The present invention provides a grass protection system comprising first and second grass protection blocks and a first interlock means for preventing or substantiallv preventing vertical movement of the first grass protection block relative to the second grass protection block; wherein the grass protection system further comprises a second interlock means for allowing relative movement between the first grass protection block and the second grass protection block but inhibiting the first grass protection block moving apart from the second grass protection block to such a distance as would dis-engage the interlocking between the first and second grass protection blocks.

In a preferred embodiment the first interlock means is integral with the second interlock means. In a particularly preferred embodiment the first grass protection block has first engaging means for interlocking with complementary second engaging means provided on the second grass protection block so as to prevent or substantially prevent vertical movement of the first grass protection block relative to the second grass protection block, wherein the first and second engaging means co-operate so as to inhibit the first grass protection block moving apart from the second grass protection block to such a distance as would dis-engage the interlocking between the two blocks.

In a preferred embodiment the first engaging means comprises: a projection provided on a side wall of the first grass protection block; and the second engaging means comprises an aperture provided on a confronting side wall of the second grass protection block for receiving the projection; and wherein the system further comprises retaining means for preventing withdrawal of the projection from the recess.

Further preferred embodiments of a grass protection system according to the invention are set out in claims 4 to 7.

A further preferred embodiment of the present invention provides a grass protection block in which adjacent cells are connected by a lateral drainage channel. In the conventional grass protection blocks described above, a cell is drained only by means of the aperture in the base of the cell. This means that water will drain into the bedding layer 5. In some instances, the porosity of the bedding layer can be less than that of the root growing medium within the cell structure. Where this occurs, vertical drainage of water is resisted and the bedding layer will gradually soften thus causing instability of the structural base layer so that the bedding layer might become unstable. Moreover, if a retaining pin 9 is provided in a cell it would be possible for the head of the pin to seal the aperture so that the cell cannot be drained. These problems are overcome by allowing water to pass between adjacent cells so that it can be drained to a point away from the load bearing area.

A further problem with the prior art grass protection system is that, in use, the underlying root zone medium (bedding layer) is usually a soft, highly compressive organic material offering a substantial deficiency in the structural strength of the combined layers Under vertical traffic loading, this can lead to movement within the bedding layer and subsequent surface rutting unless this layer is removed or kept to an acceptable minimum. Another preferred embodiment of the present invention provides a grass protection block where in the depth of the block is sufficiently large such that, in use, the root zone material and grass structure is contained predominantly within the grass protection blocks.

In a further preferred embodiment each grass protection block has a square or substantially square cross-section when seen in plan view.

A second aspect of the present invention provides a grass protection block for use in a grass protection system as defined above.

A third aspect of the present invention provides a grass protection block comprising an array of cells for containing grass. wherein two adjacent cells are connected by a lateral drainage channel.

A fourth aspect of the present invention provides a grass protection block wherein the depth of the block is sufficiently large such that, in use, the root structure of the grass remains within the grass protection block.

The present invention also provides a grass protection system comprising first and second grass protection blocks and a first interlock means for preventing or substantially preventing vertical movement of the first grass protection block relative to the second grass protection block; wherein the grass protection system further comprises a second interlock means for inhibiting the first grass protection block moving apart from the second grass protection block to such a distance as would dis-engage the interlocking between the first and second grass protection blocks.

Preferred embodiments of the invention will now be described in detail as illustrative examples with reference to the accompanying figures in which:
Figure 1(a) is a perspective view of a conventional grass protection block;
Figure 1(b) is a partial enlarged view of the grass protection block of Figure 1(a);
Figure 2 is a sectional view of a grass protection block as installed;
Figure 3(a) is a partial sectional view of two grass protection blocks showing conventional "tongue and groove" interlocking;
Figure 3(b) is a partial sectional view of two grass protection blocks showing another conventional "tongue and groove" interlocking;
Figure 4(a) is a plan view of a grass protection block having conventional "tegular edge interlocking, Figures 4(b) and 4(c) are side views of the grass protection block of Figure 4(a), and Figure 4(d) is an end view of the grass protection block of Figure 4(a);
Figure 5 is a plan view of a grass protection block according to one embodiment of the present invention;
Figure 6(a), 6(b) and 6(c) are partial sectional views showing three stages in the installation of two of the grass protection blocks of Figure 5;
Figure 7 is a view of a grass protection block according to a second embodiment of the present invention;
Figure 8 is a partial sectional view corresponding to Figure 6(c) of two grass protection blocks according to another embodiment of the invention;
Figure 9 is a view corresponding to Figure 1(b) for the embodiment of Figure 8; and
Figure 10 is a plan view of a grass protection block according to another embodiment of the invention.

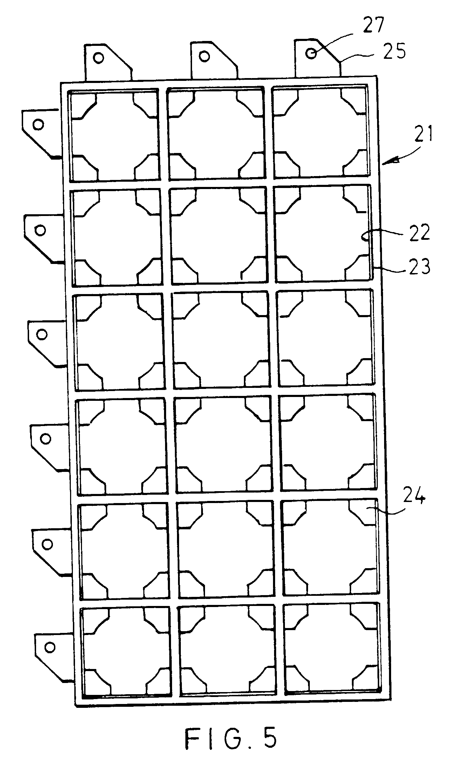

Figure 5 is a plan view of a grass protection block 21 according to a first embodiment of the invention. As with the prior art grass protection blocks, it comprises a matrix of cells 22, with each cell being defined by walls 23 and a base 24.

Two walls of the grass protection block are provided with projections 25, and the remaining two sides of the block are provided with apertures 26 for receiving the projections. When the grass protection blocks are installed two adjacent blocks are arranged so that the projections 25 of one grass protection block pass through apertures in the other grass protection block. The width of the aperture is greater than the width of projections, so as to allow some sideways motion of one block relative to the other. to allow for thermal expansion/contraction.

Each projection is provided with a vertical through-hole 27. Once a projections 25 at one side of a grass protection block has been fully inserted into an apertures in one or more neighbouring grass protection blocks, a locking pin 28 is inserted into the hole 27. This pin will prevent the projection 25 accidentally coming out of the aperture 26, and thus ensures that two adjacent grass protection blocks remain vertically interlocked.

Figure 5 shows a grass protection block with a 3 x 6 array of cells. However, a grass protection block of the invention is not limited to this and could have different proportions (for example, the block could be square) and/or a different number of cells.

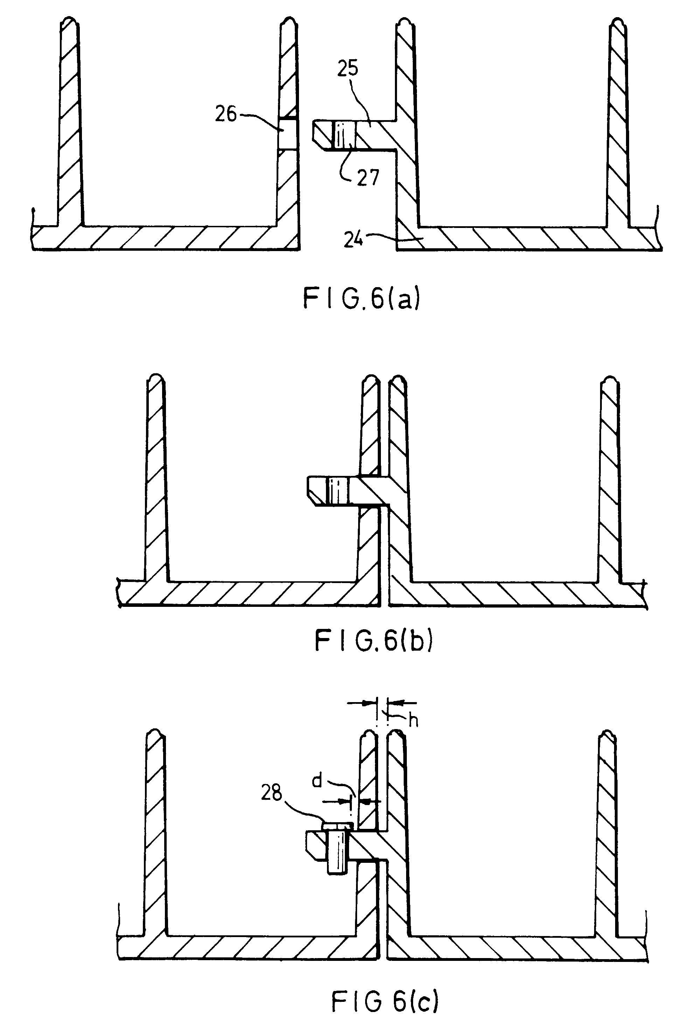

As shown in Figure 6(a) to 6(c), it is preferable to position the through-hole such that there is a gap (d) between the locking pin and the wall of the adjacent grass protection block, and also a gap (h) between wall of adjacent blocks. These will allow for both expansion and contraction of the grass protection blocks from their original position. The necessary gaps will be determined by the coefficient of expansion of the material from which the grass protection blocks are made and the intended temperature range in which they will be used.

Drainage holes (not shown) can be provided in the base of each cell. While such holes can be disadvantageous in some circumstances, as described above, they are sometimes beneficial - they prevent the rapid de-hydration of the root growth medium within the cell structure. The damp environment within and below the bedding layer will keep the overlying root growth medium moist.

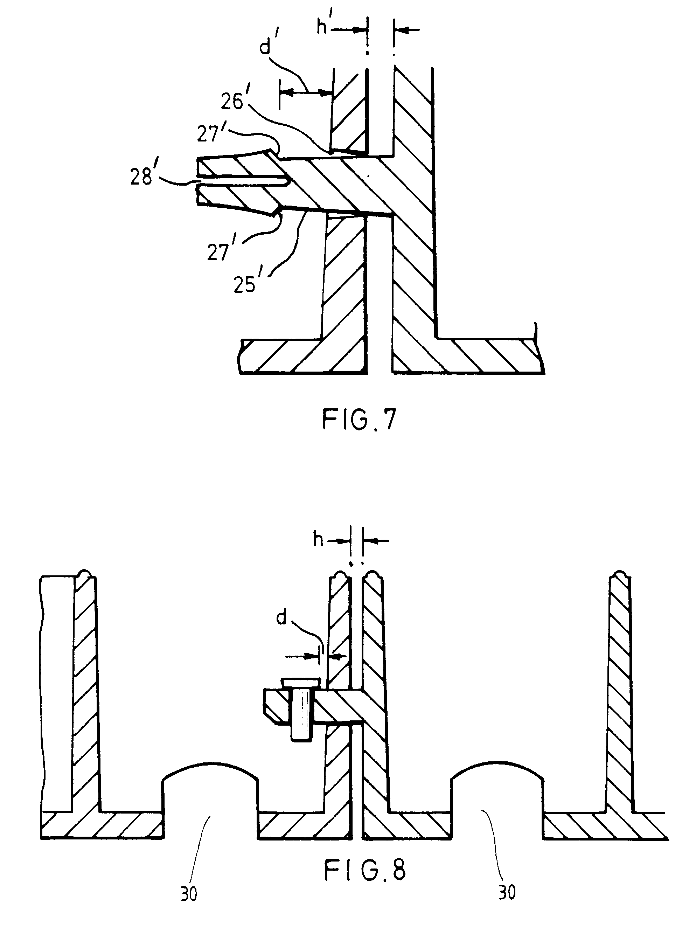

An alternative embodiment is shown in Figure 7 As in the previous embodiment one side wall of a grass protection block is provided with projections 25', and corresponding apertures 26' are provided in a side wall of another block. The distal end of a projection is provided with two ledges 27', one each on the upper surface and lower surface of the projection. If the blocks are moved apart, for example as a result of thermal contraction, the ledges will come into contact with the wall of the adjacent block and so oppose further movement apart of the blocks.

As with the first embodiment it is preferable to install the grass protection blocks such that there is a gap (d') between the ledges and the wall of the adjacent grass protection block, and a gap (h') between wall of adjacent blocks. For blocks made of Polyethylene (virgin or recycled), typically 500mm by 500mm, being installed in the U.K., suitable values of d' and h' are 8mm and 2mm respectively.

The end of the projection is provided with a recess 28' which preferably extends into the projection to a depth beyond the ledges 27'. This enables the thickness of the distal end of the projection to be reduced by applying a "squashing force";this assists insertion of the projection into the aperture, as the upper and lower faces of the aperture will apply a squashing force.

Although the embodiments described above has projections provided on two side walls of each block this is not necessary. For example, it would be possible to make two different blocks - one having projections provided on all four side walls and the other having apertures on all four side walls. Conversely, all four side walls of a block could be provided with projections alternating with apertures.
When installing a grass protection system it is preferable for the gap between two adjacent blocks is approximately constant throughout the entire structure. This allows equal expansion and or contraction to occur at each interface between two blocks. It is accordingly preferable for a grass protection block to have some means of ensuring that the gap left between two adjacent blocks during installation is approximately constant.

In the second preferred embodiment of the invention described above, the constant gap is achieved by tapering the projections 25' and the aperture 26', as shown in Figure 7. When two adjacent blocks are pushed together during installation the projection will pass through the aperture until the projection comes into contact with the aperture, at which point further movement of the blocks towards one another will be resisted by the aperture taper.

It would be possible for the projection 25 and aperture 26 of the grass protection block shown in Figures 5, 6(a), 6(b) and 6(c) to be tapered in a similar manner to the protection 25' and aperture 26' of the grass protection block shown in Figure 7.

In use, it has been assessed that the largest movement of one block relative to an adjacent block will be caused by contraction (during winter) if a system is installed during the height of the summer For this reason. 8mm of contraction has been allowed for Conversely, if the grass block was installed during the winter, the expansion that will occur during summer is estimated to be in the order of 2mm, once the cells have been filled and overgrown with grass (the grass will oppose movement of one block relative to another). The expansion of 2mm can take place within the interlock, by forcing the projection through the aperture with some consequent deformation of the materials.

Should the installation need to be dismantled, two blocks can be separated easily by pressing the two prongs of the protection together. This then allows the projection to be withdrawn from the aperture.

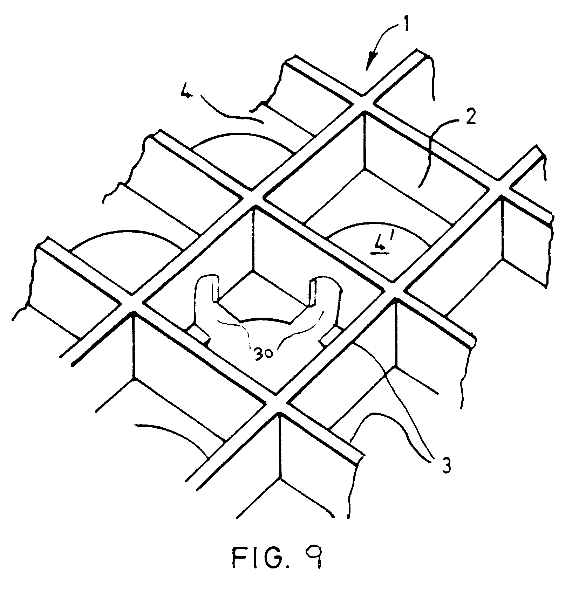

A grass protection block according to a further preferred embodiment of the invention is shown in Figures 8 and 9. This block is provided with drainage channels 30 running from cell to cell. This means that rainwater or other liquids that collect in a cell will not all drain away through the hole in the base of the cell. This is beneficial as water draining through the hole in the base of the cell into the bedding layer tends de-stabilise the bedding layer. Indeed, if the drainage channels can provide adequate drainage it would not be essential to provide the base of the cell with an aperture. This will eliminate the problem referred to above of the grass root zone extending into the bedding layer. Of course, such drainage channels could also be provided in a grass protection block having the "snap-fit" interlocking shown in Figure 7.

The lateral drainage channels provide a further advantage, as they allow the roots of the grass or other material growing in the cells to pass from one cell to another. The root structures of grass growing in two adjacent blocks will become intertwined and so improve the structural strength of the laid system; it will also reduce the risk of grass in a particular cell drying during a prolonged period of dry weather, thus eliminating the risk of individual root growth medium/grass pockets being ejected from the cell structure.

A conventional grass protection block is around 50mm high. This is not entirely satisfactory, as the root zone of the grass will tend to extend into the bedding layer, through the apertures in the bases of the cell. This will de-stabilise the bedding layer, and could lead to subsidence. It is presently considered necessary for the overall depth of the root zone to be a combination of cell depth and bedding layer to enhance the grass growth structure. It has also been identified that in use, the bedding layer beneath the block destabilises the overall construction strength for load transfer. To address this problem, according to a further preferred embodiment of the invention the cell depth is increased to 70-80mm so that the root zone of the grass is substantially contained within the grass protection block. This allows the depth of the bedding layer to be minimised, and the structural strength of this material to be upgraded. Typically, sharp sand could be used for this application - this would also act as a drainage and regulating layer for level purposes.

Conventional grass protection blocks are rectangular in plan view, as shown in Figure 1(a). This means that shrinkage of the block, which will inevitably occur during the moulding process, will be different for the two plan dimensions of the blocks.

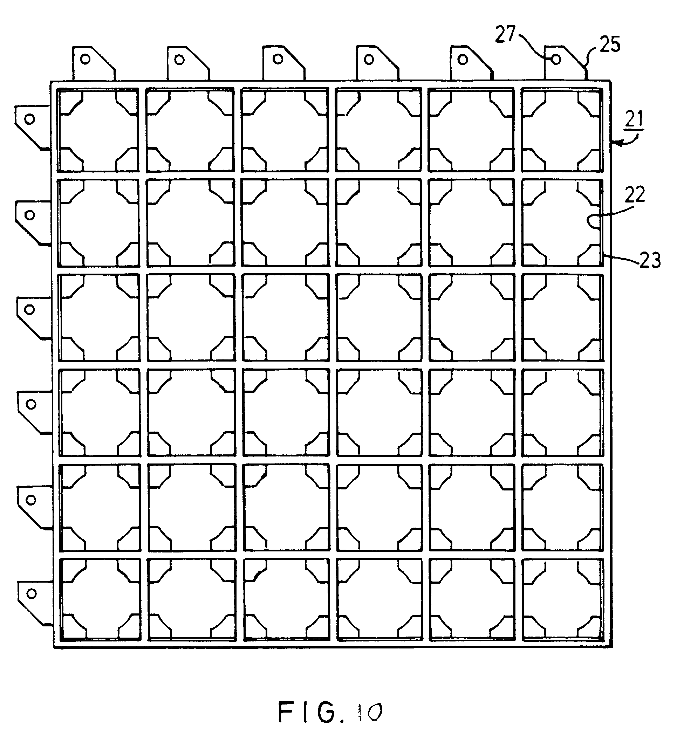

As shown in Figure 10, a grass protection block of this invention can be made with a square cross-section. This will lead to equal shrinkage along both plan dimensions and thus eliminate dimensional inconsistency.

Of course, it would be possible to make a conventional grass protection block deeper, and, or provide a conventional grass protection block with lateral drainage channels, and, or manufacture a conventional grass protection block having a square cross-section when seen in plan view.

## Claims

1. A grass protection system comprising first and second grass protection blocks and a first interlock means for preventing or substantiallv preventing vertical movement of the first grass protection block relative to the second grass protection block;
characterised in that the grass protection system further comprises a second interlock means for allowing relative movement between the first grass protection block and the second grass protection block but for inhibiting the first grass protection block moving apart from the second grass protection block to such a distance as would dis-engage the first interlocking between the first and second grass protection blocks.

2. A grass protection system as claimed in claim I wherein the first interlock means is integral with the second interlock means.

3. A grass protection system as claimed in claim 2 wherein the first grass protection block has first engaging means for interlocking with complementary second engaging means provided on the second grass protection block so as to prevent or substantially prevent vertical movement of the first grass protection block relative to the second grass protection block, wherein the first and second engaging means co-operate so as to inhibit the first grass protection block moving apart from the second grass protection block to such a distance as would dis-engage the interlocking between the two blocks.

4. A grass protection system as claimed in claim 3, wherein the first engaging means comprises: a projection provided on a side wall of the first grass protection block; wherein the second engaging means comprises an aperture provided on a confronting side wall of the second grass protection block for receiving the projection; and wherein the system further comprises retaining means for inhibiting withdrawal of the projection from the recess.

5. A grass protection system as claimed in claim 4 wherein the retaining means comprises a step provided on one surface of the projection.

6. A grass protection system as claimed in claim 3 wherein the first and second engaging means co-operate so as to prevent the first grass protection block moving apart from the second grass protection block to such a distance as would dis-engage the interlocking between the two grass protection blocks.

7. A grass protection system as claimed in claim 6 wherein a through-hole is provided in the projection provided on the first grass protection block and whereby, in use, a retaining member is inserted into the through-hole to prevent the projection being withdrawn from the aperture in the second grass protection block.

8. A grass protection system as claimed in any of claims 1 to 7, wherein each grass protection block comprises an array of cells for containing grass, wherein two adjacent cells are connected by a lateral drainage channel.

9. A grass protection system as claimed in any of claims 1 to 8 wherein the depth of each grass protection block is sufficiently large such that, in use, the root structure of the grass remains within the grass protection block.

10. A grass protection system as claimed in any preceding claim wherein each grass protection block has a square or substantially square cross-section when seen in plan view.

11. A grass protection block for use in a grass protection system as defined in any preceding claim.

12. A grass protection block comprising an array of cells for containing grass, characterised in that two adjacent cells are connected by a lateral drainage channel.

13. A grass protection block characterised in that the depth of the block is sufficiently large such that, in use, the root structure of the grass remains within the grass protection block.
